Europäisches Patentamt

European Patent Office

Office européen des brevets

(11) Veröffentlichungsnummer: **0 413 976 A2**

# EUROPÄISCHE PATENTANMELDUNG

(21) Anmeldenummer: 90114068.1

(51) Int. Cl.5: **B60R 16/02**

(22) Anmeldetag: 23.07.90

(30) Priorität: 21.08.89 DE 3927562

(43) Veröffentlichungstag der Anmeldung:
27.02.91 Patentblatt 91/09

(84) Benannte Vertragsstaaten:
AT DE ES FR GB IT NL SE

(71) Anmelder: KNORR-BREMSE AG
Moosacher Strasse 80 Postfach 401060

D-8000 München 40(DE)

(72) Erfinder: **Bielig, Peter Michael**
**Albrechtstrasse 24**
**D-8000 München 19(DE)**
Erfinder: **Broch, Walter**
**Hauptstrasse 15**
**D-8061 Wiedenzhausen(DE)**

(54) **Einrichtung zur Anhänger-Kennung bei Lastzügen.**

(57) Die Einrichtung zur Anhänger-Kennung bei Lastzügen, deren Zugfahrzeug mit einer Antiblockiervorrichtung ausgestattet ist, dient dazu, dem Fahrzeugführer zu signalisieren, ob auch das Anhängefahrzeug eine Antiblockiervorrichtung (10) aufweist und deren Kabelkupplung (9) ordentlich gekuppelt ist. Die Einrichtung weist hierzu eine elektronische, logische Schaltvorrichtung (7) auf, in welcher wenigstens ein erstes und ein zweites Signal verarbeitet werden: Das erste Signal wird nur bei vorhandenem Anhängefahrzeug erstellt, das zweite Signal wird durch eine Massepotentialführung in einer Prüfleitung (11,11') der Anhänger-Antiblockiervorrichtung (10) gebildet und als ein Informationssignal in der Schaltvorrichtung (7) gespeichert. Bei vorliegendem ersten Signal und zugleich fehlendem Informationssignal wird eine Informationslampe (4) betätigt, welche dem Fahrzeugführer das Fehlen bzw. eine mangelhafte Ankupplung einer Anhänger-Antiblockiervorrichtung (10) anzeigt.

Durch das Erstellen des zweiten Signals aus einer Massepotential-Führung der Prüfleitung (11) sind keine Einbauten in die Stromversorgungsleitung (8,8') für die Anhänger-Antiblockiervorrichtung (10) erforderlich, deren Stromversorgung und Ausfallrate werden daher von der Einrichtung nicht ungünstig beeinflußt.

EP 0 413 976 A2

## EINRICHTUNG ZUR ANHÄNGER-KENNUNG BEI LASTZÜGEN

Die Erfindung betrifft eine Einrichtung zur Anhänger-Kennung bei Lastzügen, bei welchen das Zugfahrzeug eine Antiblockiervorrichtung aufweist und sowohl alleine als auch mit einem Anhängefahrzeug mit oder ohne eigener Antiblockiervorrichtung betreibbar ist,
- mit einer Meßvorrichtung im Zugfahrzeug, die bei gekuppeltem Zustand einer vom Zug- zum Anhängefahrzeug führenden Brems-, Blinklicht- oder dgl. Leitung ein erstes Signal abgibt,
- mit einer Stromversorgungsleitung und einer Prüfleitung im Zugfahrzeug, an welche vermittels einer Kabelkupplung eine Stromversorgungs- bzw. eine Prüfleitung der Antiblockiervorrichtung eines Anhängefahrzeuges anschließbar sind, wobei die Antiblockiervorrichtung des Anhängefahrzeuges nach ihrer Inbetriebnahme in die Prüfleitung ein frühestens bei Fahrtbeginn oder nach einer Wartezeit wieder erlöschendes Prüfsignal einsteuert,
- und mit einer elektronischen, logischen Schaltvorrichtung im Zugfahrzeug, welche vom ersten Signal und einem, das Angeschlossensein einer Antiblockiervorrichtung anzeigenden, zweiten Signal ansteuerbar ist und die Betätigung eines gegebenenfalls als Informationslampe ausgebildeten Schauzeichens für den Kraftfahrzeugführer steuert.

Eine mit Ausnahme der Prüfleitung den vorstehend genannten Merkmalen entsprechende Einrichtung ist der DE-C-26 40 355 entnehmbar. Die Meßvorrichtung zum Erstellen des ersten Signals ist hierbei als Strommeßvorrichtung im zum Anhänger führenden Abschnitt der Anhängerbremslichtleitung ausgebildet, sie weist einen in diese Anhängerbremslichtleitung eingeschalteten Widerstand auf, dessen Spannungsabfall über einen Schwellwertschalter das erste Signal bildet. Das zweite Signal wird durch eine zweite, entsprechende Strommeßvorrichtung gebildet, welche in die Stromversorgungsleitung für die Antiblockiervorrichtung des Anhängers eingeordnet ist. Die logische, elektronische Schaltvorrichtung verarbeitet die beiden Signale unter Zuhilfenahme eines dritten, in Abhängigkeit vom Schließen eines Bremslichtschalters erstellten Signals und mit Hilfe einer astabilen Kippstufe derart, daß eine Informationslampe für den Kraftfahrzeugführer nur dann aufleuchtet, wenn das Zugfahrzeug mit einem Anhängefahrzeug ohne oder mit einer defekten, keine Stromaufnahme zeigenden oder nicht an die Stromversorgungsleitung angeschlossenen Anhänger-Antiblockiervorrichtung in Betrieb genommen wird und eine Bremsung erfolgt. Diese bekannte Einrichtung ist mit dem Mangel behaftet, daß die Strommeßvorrichtungen in die zum Anhänger führenden Leitungen eingeordnete Bauteile darstellen, welche bei ihrem Defekt dem Stromfluß unterbrechen können; es können also die Bremslichter des Anhängers ausfallen, wodurch Verkehrsgefährdungen hervorgerufen werden können, und die Ausfallrate der in der Stromversorgungsleitung für die Anhänger-Antiblockiervorrichtung befindlichen Strommeßvorrichtung steigert die dieser Antiblockiervorrichtung zuordenbare Ausfallrate. Weiterhin beeinträchtigen die Strommeßvorrichtungen durch ihren elektrischen Widerstand die Stromversorgungen der Anhängerbremsleuchten sowie der Anhänger-Antiblockiervorrichtung. Des weiteren müssen Störungen in der Anhänger-Antiblockiervorrichtung nicht dazu führen, daß diese keinen Strom mehr aufnimmt, zumeist bleibt vielmehr die Stromaufnahme der gestörten Anhänger-Antiblockiervorrichtung von der Störung völlig unbeeinflußt; trotz Ausfall der Antiblockiervorrichtung des Anhängers wird hierbei der Fahrzeugführer durch die Informationslampe nicht gewarnt.

Der DE-PS-30 32 837 ist ebenfalls eine mit Ausnahme der Prüfleitung den eingangs genannten Merkmalen entsprechende Einrichtung entnehmbar, bei welcher zum Erstellen des ersten Signals ein besonderer Prüfstromkreis vorgesehen ist, welcher über die Anhängerleuchten geführt ist. Die Stromversorgung der Anhängerleuchten wird hierbei zwar nicht beeinträchtigt, doch sind zusätzliche, elektrische Schaltkontakte für einen Haltestromkreis erforderlich. Das zweite Signal wird jedoch wiederum durch Strommessung in der Stromversorgungsleitung für die Anhänger-Antiblockiervorrichtung erstellt, wozu in diese Stromversorgungsleitung eine von einer Diode überbrückte Relaisspule eingeordnet ist; auch diese Strommessung ist mit dem vorstehend bereits geschilderten Mängeln behaftet. Bei Betrieb des Lastzuges mit einem Anhängerfahrzeug ohne oder mit einer keine Stromaufnahme zeigenden Antiblockiervorrichtung leuchtet hierbei die Informationslampe nicht nur während Bremsungen, sondern ständig.

Die DE-OS-2 262 567 offenbart eine Einrichtung zur Anhänger-Kennung, welche keinerlei Strommessung in zum Anhänger führenden, elektrischen Leitungen benötigt, bei welcher vielmehr reine Potentialmessungen in diesen Leitungen ausreichen. Die Potentialmessung erfolgt über Transistoren, deren Basen mit Steckkupplungen zum Anschluß von entsprechenden Anhängerleitungen und über Widerstände an eine Spannungsquelle angeschlossen sind. Das erste, dem Prüfen des Angekuppeltseins eines Anhängefahrzeuges dienende Signal wird beim Kuppeln eines besonderen Steckkontaktes in einer für die Anhängerbeleuchtung vorgesehenen Steckverbindung erstellt; die Steckverbindung ist im Anhänger mit dessen Masseleitung verbunden, welche über die Steckverbindung mit einer Masseleitung des Zugfahrzeuges kuppelbar ist. Das zweite, dem Prüfen des Vorhandenseins und der Funktionsfähigkeit einer Anhänger-Antiblockiervorrichtung dienende Signal wird in Anhängigkeit vom Kuppeln einer gesonderten, dem Anschluß der Anhänger-Antiblockiervorrichtung dienenden Steckvorrichtung mit einer Prüfleitungs-Verbindung und dem Potential dieser Prüfleitung erstellt, wobei diese Prüfleitung nur bei funktionsfähiger, vorhandener Anhänger-Antiblockiervorrichtung durch letztere einen Masseanschluß erhält. Der Mangel dieser Einrichtung ist darin zu sehen, daß sie nur mit besonders ausgerüsteten Anhängefahrzeugen betreibbar ist: Die Steckvorrichtung für die Anhängerbeleuchtung benötigt einen besonderen, mit der Anhängermasse verbundenen Steckkontakt, welcher normalerweise bei Anhängefahrzeugen nicht vorhanden ist.

Bei Antiblockiervorrichtung für Anhängefahrzeuge ist es bekannt, eine den eingangs genannten Merkmalen entsprechende Prüfleitung vorzusehen. Diese Prüfleitung ist im Zugfahrzeug über eine Warnlampe an eine Spannungsquelle angeschlossen, in der Antiblockiervorrichtung des Anhängefahrzeuges wird diese Prüfleitung während eines zu Beginn ihrer Inbetriebnahme ablaufenden Prüfzyklusses und einer folgenden, kurzen Zeitspanne, mindestens jedoch bis zu Fahrtbeginn, an eine Masseleitung angeschlossen, so daß die Prüflampe aufleuchtet. Der Masse-Anschluß der Prüfleitung kann jedoch auch nach einer Wartezeit - ohne Fahrtbeginn - beendet werden. Bei positivem Abschluß des Prüfzyklusses, wenn also die Antiblockiervorrichtung des Anhängers als funktionsfähig festgestellt ist, wird die Masseverbindung der Prüfleitung nach Ablauf der erwähnten Zeitspanne bzw. zu Fahrtbeginn aufgetrennt, so daß die Prüflampe erlischt und während des nachfolgenden Betriebes erloschen bleibt. Falls der Prüfzyklus jedoch mit negativem, fehlerhafter Anhänger-Antiblockiervorrichtung entsprechendem Ergebnis endet, verbleibt die Prüfleitung in der Anhänger-Antiblockiervorrichtung auch nach Ablauf der erwähnten Zeitspanne und während der Fahrt mit der Fahrzeugmasse verbunden, die Warnlampe leuchtet also während des ganzen, nachfolgenden Betriebes des Lastzuges.

Es ist Aufgabe der Erfindung, eine Einrichtung zur Anhänger-Kennung der eingangs genannten Art derart auszugestalten, daß sie keinerlei Sonderausrüstung oder -ausstattung des Anhängefahrzeuges erfordert, zumindest die Stromversorgungsleitung für die Antiblockiervorrichtung des Anhängefahrzeuges von die Störungsrate steigernden und/oder die Stromversorgung beeinträchtigenden Einbauten freiläßt und dabei einen einfachen Aufbau aufweist.

Diese Aufgabe wird nach der Erfindung dadurch gelöst, daß bei einer Einrichtung nach den eingangs genannten Merkmalen der logischen Schaltvorrichtung als zweites Signal das Prüfsignal zugeführt und in dieser Schaltvorrichtung als ein Informationssignal gespeichert wird, und daß die Schaltvorrichtung das Schauzeichen nur bei durch das erste Signal singalisiertem Angekuppeltsein eines Anhängefahrzeuges und fehlendem Informationssignal betätigt.

Nach der weiteren Erfindung vorteilhafte Ausgestaltungsmöglichkeiten für eine derartige Einrichtung zur Anhänger-Kennung sind den Merkmalen der Unteransprüche entnehmbar.

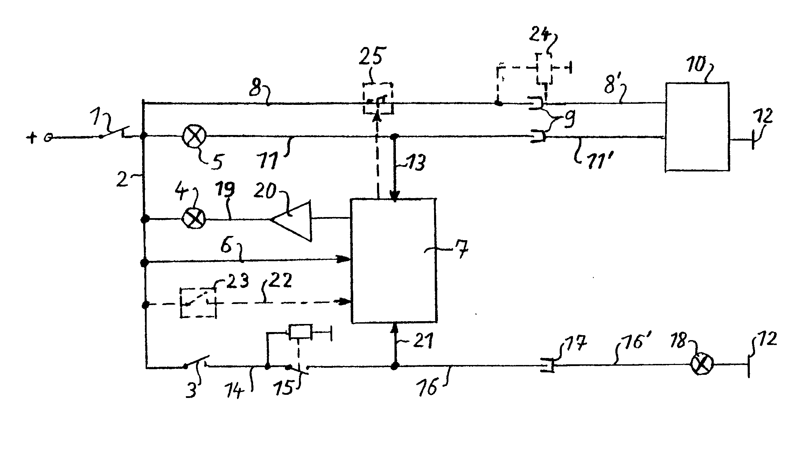

In der Zeichnung ist als Ausführungsbeispiel für die Erfindung ein Prinzipschaltbild einer Einrichtung zur Anhänger-Kennung dargestellt.

Im Zugfahrzeug ist eine nicht dargestellt Strom- bzw. Spannungsquelle über einen Zünd- bzw. Betriebsschalter 1 an eine Leitung 2 angeschlossen. Die Leitung 2 führt zueinander parallel zu einem Bremslichtschalter 3, einer Informationslampe 4, einer Warnlampe 5 und über eine Zweigleitung 6 zu einer elektronischen, logischen Schaltvorrichtung 7. Weiterhin ist an die Leitung 2 eine Stromversorgungsleitung 8 angeschlossen, an welche vermittels einer Kabelkupplung 9 eine entsprechende Stromversorgungsleitung 8' in einem mit dem Zugfahrzeug zu einem Lastzug gekuppelten Anhängefahrzeug anschließbar ist. Die Stromversorgungsleitung 8' steht mit einer Antiblockiervorrichtung 10 des Anhängefahrzeuges in Verbindung und versorgt diese bei gekuppelter Kabelkupplung 9 und geschlossenem Zünd- bzw. Betriebsschalter 1 mit Strom. Von der Antiblockiervorrichtung 10 geht eine Prüfleitung 11' im Anhängefahrzeug aus, welche über einen zweiten Kontakt der Kabelkupplung 9 mit einer entsprechenden Prüfleitung 11 im Zugfahrzeug kuppelbar ist. Die Prüfleitung 11 führt zum zweiten Pol der Warnlampe 5. Weiterhin steht die Antiblockiervorrichtung 10 mit der Fahrzeugmasse 12 des Anhängefahrzeuges in Verbindung, wodurch ihr Massepotential zugeführt wird; das Zugfahrzeug und das Anhängefahrzeug weisen durch eine nicht dargestellte Verbindung ein gemeinsames Massepotential auf. Im Zugfahrzeug führt eine Zweigleitung 13 von der Prüfleitung 11 zur Schaltvorrichtung 7.

Die Leitung 2 ist über den Bremslichtschalter 3 mit einer Leitung 14 verbindbar, welche über einen bei Spannungsführung der Leitung 14 geschlossenen Trennschalter 15 an die Anhängerbremslichtleitung 16 des Zugfahrzeuges anschließbar ist. Der Trennschalter 15 ist als Schalter eines bei spannungsführender Leitung 14 erregten Relais ausgebildet. Die Anhängerbremslichtleitung 16 ist über eine Kabelkupplung 17 mit einer entsprechenden Anhängerbremslichtleitung 16' im Anhängefahrzeug kuppelbar, welche über die Bremsleuchten 18 mit der Fahrzeugmasse 12 in Verbindung steht. Von der Anhängerbremslichtleitung 16 führt eine Zweigleitung 21 zur Schaltvorrichtung 7. Von der Schaltvorrichtung 7 geht eine Leitung 19 aus, welche über einen Verstärker bzw. Relaisschalter 20 zum zweiten Anschluß der Informationslampe 4 führt.

Der Schaltvorrichtung 7 ist über die Zweigleitung 21 ein erstes Signal und über die Zweigleitung 13 ein zweites Signal zuführbar. Das erste Signal wird durch das Massepotential in der Anhängerbremslichtleitung 16 erstellt, falls diese Leitung bei geöffnetem Bremslichtschalter 3 und/oder Trennschalter 15 über die Kabelkupplung 17 und die Anhängerbremslichtleitung 16′ sowie die Bremsleuchten 18 an die Fahrzeugmasse 12 angeschlossen ist. Dieses erste Signal kann also nur auftreten, falls an das Zugfahrzeug ein Anhängefahrzeug angekoppelt und die Kabelkupplung 17 gekuppelt ist. In der Schaltvorrichtung 7 wird dieses erste Signal während Bremsvorgängen gespeichert, während welchen der Bremslichtschalter 3 sowie der Trennschalter 15 geschlossen sind und die Anhängerbremslichtleitung 16 bei in Betrieb befindlichem Lastzug und somit geschlossenem Zünd- bzw. Betriebsschalter 1 spannungsführend ist.

Die Antiblockiervorrichtung 10 des Anhängefahrzeuges führt bei ihrer Inbetriebnahme, welche durch Kuppeln der Kabelkupplung 9 bei geschlossenem Zünd- bzw. Betriebsschalter 1 oder Schließen dieses Zünd- bzw. Betriebsschalters 1 bei bereits gekuppelter Kabelkupplung 9 erfolgen kann, einen Prüfzyklus durch, während welchem sie die Prüfleitung 11′ mit der Fahrzeugmasse 12 verbindet. Die Warnlampe 5 leuchtet dabei auf. Nach Abschluß des rasch verlaufenden Prüfzyklus hält die Antiblockiervorrichtung 10 die Verbindung der Prüfleitung 11′ mit der Fahrzeugmasse 12 noch für eine kurze Zeitspanne aufrecht, so daß der Fahrzeugführer das Aufleuchten der Warnlampe 5 sicher erkennen kann. Bei positivem Ablauf des Prüfzyklusses, also nach Feststellen der Funktionsfähigkeit der Antiblockiervorrichtung 10, trennt die Antiblockiervorrichtung 10 nach Ablauf der erwähnten Zeitspanne, jedoch frühestens zu Fahrtbeginn oder nach einer Wartezeit die Prüfleitung 11′ von der Fahrzeugmasse 12 ab, wodurch die Warnlampe 5 erlischt. Das Aufleuchten und Elöschen der Warnlampe 5 bei Inbetriebnahme der Anhänger-Antiblockiervorrichtung 10 zeigt dem Fahrzeugführer an, daß der Prüfzyklus für dieses erfolgt ist und ohne Fehlerfeststellung beendet wurde. Falls der Prüfzyklus einen Fehler in der Antiblockiervorrichtung 10 feststellt, hält letztere die Verbindung von der Prüfleitung 11′ zur Fahrzeugmasse 12 auch nach Ablauf der erwähnten Zeitspanne und während der Fahrt des Lastzuges aufrecht, die Warnlampe 5 leuchtet also ständig während der ganzen Betriebszeit des Lastzuges.

Der Schaltvorrichtung 7 wird durch die Zweigleitung 13 eine zweites Signal zugeführt, welches aus der Massepotentialführung in der Prüfleitung 11 während des vorstehend erwähnten Prüfzyklusses der Antiblockiervorrichtung 10 und der anschließenden, vorstehend erwähnten Zeitspanne besteht. Dieses zweite, eine angeschlossene Anhänger-Antiblockiervorrichtung 10 und deren Funktionsfähigkeit feststellende Signal wird in der Schaltvorrichtung 7 als ein Informationssignal für die ganze Betriebszeit mit geschlossenem Zünd- bzw. Betriebsschalter 1 gespeichert.

Die Schaltvorrichtung 7 hält bei fehlendem, ersten Signal, unabhängig vom Vorhandensein eines Informationssignals, die Leitung 19 und damit über den Verstärker 20 die zweite Seite der Informationslampe 4 ständig von Massepotential abgetrennt, so daß die Informationslampe 4 nicht aufleuchten kann. Bei anstehendem bzw. gespeichertem ersten Signal und anstehendem bzw. gespeichertem Informationssignal hält die Schaltvorrichtung 7 die Leitung 19 ebenfalls vom Massepotential abgetrennt, die Informationslampe 4 ist hierbei also dunkel. Nur dann, wenn bei anstehendem bzw. gespeichertem ersten Signal kein Informationssignal ansteht, bzw. gespeichert ist, verbindet die Schaltvorrichtung 7 die Leitung 19 und damit die zweite Seite der Informationslampe 4 mit der Fahrzeugmasse, so daß die Warnlampe 4 aufleuchtet.

Aus dem vorstehend dargelegten Funktionsverhalten der logischen Schaltvorrichtung 7 ergibt sich :

Wenn das Zugfahrzeug alleine, ohne Anhängefahrzeug betrieben wird, ist ein Aufleuchten der Informationslampe 4 durch Fehlen des ersten Signals ausgeschlossen. Bei Betrieb des Zugfahrzeuges mit angehängtem Anhängefahrzeug leuchtet die Informationslampe 4 ebenfalls nicht auf, wenn bei Inbetriebnahme der Antiblockiervorrichtung 10 des Anhängefahrzeuges die Prüfleitung 11 vorübergehend Massepotemtial führt, was das Vorhandensein der Antiblockiervorrichtung 10 im Anhängefahrzeug sowie eine ordentlich gekuppelte Kabelkupplung 9 bedeutet. Tritt dieses vorübergehende Massepotential in der Prüfleitung 11 jedoch nicht auf, was das Fehlen einer Antiblockiervorrichtung im Anhänger bzw. deren Funktionsstörung durch beispielsweise ungenügend gekuppelte Kabelkupplung 9 bedeutet, so leuchtet die Informationslampe 4 auf und signalisiert dem Fahrzeugführer, daß der Lastzug ohne Antiblockierfunktion für das Anhängefahrzeug betrieben wird.

Beim vorstehend beschriebenen Ausführungsbeispiel leuchtet die Informationslampe 4 während der ganzen Betriebszeit des Lastzuges bei fehlender Antiblockierfunktion für das Anhängefahrzeug. Falls erwünscht ist, daß die Informationslampe 4 bei dieser Betriebsweise des Lastzuges nur während Bremsungen aufleuchtet, kann die Schaltvorrichtung 7 derart ausgebildet werden, daß sie nur bei positiver Spannungsführung in der Zweigleitung 21 ein Aufleuchten der Informationslampe 4 zuläßt. Statt dessen kann auch eine gesonderte Signalleitung 22 vorgesehen werden, welche von der Leitung 2 zur Schaltvorrichtung 7 führt und in welche ein nur während Bremsungen geschlossener Schalter 23 eingeordnet ist, wie es in der Zeichnung gestrichelt dargestellt ist: Über diese Signalleitung 22 wird der Schaltvorrichtung 7 ein drittes Signal zugeführt, dessen Anstehen in der Schaltvorrichtung 7 als ein weiteres Erfordernis zum Aufleuchten der Informationslampe 4 ausgewertet wird. Der Schalter 23 kann dabei ein Bremslichtschalter sein.

Abweichend zur vorstehend beschriebenen Ausführungsform kann zum Erstellen des ersten Signals auch eine andersartige, mit einem Anhängefahrzeug zu kuppelnde Leitung, insbesondere eine Blinklicht-oder sonstige Beleuchtungsleitung anstelle der Anhängerbremslichtleitung 16 genutzt werden. Anstelle der Nutzung der Massepotential-Führung der Anhängerbremslichtleitung 16 bzw. Blinklicht- oder dgl. Leitung bei angekuppeltem Anhängefahrzeug kann zum Erstellen des ersten Signales auch das Auftreten eines Stromflusses in dieser Leitung genutzt werden, wie es eingangs als bekannt dargelegt wurde; die hiermit verbundenen Mängel müssen dann allerdings in Kauf genommen werden. In ähnlicher Weise kann auch das zweite Signal durch Messen eines Stromflusses in der Prüfleitung 11 erstellt werden, die Stromflußmeßeinrichtung kann dabei durch ihre Einordnung in eine bloße Prüfleitung, nicht aber in eine Stromversorgungsleitung, die Ausfallrate und die Stromversorgung der Anhänger-Antiblockiervorrichtung 10 nicht nachteilig beeinflussen.

Es kann zweckmäßig sein, zumindest die Kabelkupplung 9 mit einer Sperrvorrichtung 24 zu versehen, welche nach Inbetriebnahme des Lastzuges die gekuppelte Kabelkupplung 9 zumindest gegen ein Entkuppeln der Stromversorgungsleitung 8,8' sperrt: Hierdurch wird sichergestellt, daß während des Betriebes des Lastzuges kein ungewolltes Trennen der Kabelkupplung 9 zumindest hinsichtlich der Stromversorgungsleitung 8,8' auftreten kann, was einen Ausfall der Antiblockierfunktion für das Anhängefahrzeug bedeuten würde. Die Sperrvorrichtung 24 kann in einfachster Weise als ein einen Sperriegel betätigendes Solenoid ausgebildet werden, das an die Stromversorgungsleitung 8 angeschlossen ist und dessen Sperriegel im erregten Zustand den Kupplungszustand der Kabelkupplung 9 mechanisch verriegelt. Statt dessen oder auch zusätzlich kann in der Stromversorgungsleitung 8 des Zugfahrzeuges ein Unterbrecherschalter 25 eingeordnet werden, der von einer Zeitmeßvorrichtung in der Schaltvorrichtung 7 derart angesteuert wird, daß er in bestimmten Zeitintervallen kurzzeitig geöffnet wird, wobei das Öffnen bei gleichzeitig vorhandenem, beispielsweise durch den Schalter 23 angezeigtem Betätigungszustand der Fahrzeugbremsen unterdrückt bzw. beendet wird. Die Schaltvorrichtung 7 ist dabei derart auszubilden, daß beim Öffnen des Unterbrecherschalters 25 ein gespeichertes Informationssignal gelöscht wird. Durch diese Ausbildung wird erreicht, daß während der Betriebszeit des Lastzuges die Antiblockiervorrichtung 10 des Anhängefahrzeuges bei unbetätigter Fahrzeugbremse in den bestimmten Zeitintervallen kurzzeitig von ihrer Stromversorgung abgeschnitten wird, wobei nach jeder derartigen, kurzzeitigen Stromversorgungs-Unterbrechung ein Prüfzyklus für die Antiblockiervorrichtung 10 mit gegebenenfalls kurzzeitigem Aufleuchten der Warnlampe 5 zum Anzeigen dieser Prüffunktion abläuft. Hierbei wird auch jedesmalig der ordentliche Kupplungszustand der Kabelkupplung 9 überprüft. Sollte hierbei ein Funktionsfehler der Antiblockiervorrichtung 10 des Anhängefahrzeuges festgestellt werden, so wird dies durch ein andauerndes Aufleuchten der Warnlampe 5 angezeigt, sollte an der Kabelkupplung 9 doch ein unzureichender Kupplungszustand vorliegen, so wird durch Wegfall des Informationssignales in der Schaltvorrichtung 7 die Informationslampe 4 zum Aufleuchten gebracht. Während der Betriebszeit des Lastzuges werden somit regelmäßig nicht nur der ordentliche Anschluß, sondern auch die Funktionsfähigkeit der Antiblockiervorrichtung 10 des Anhängefahrzeuges überprüft und Fehler dem Fahrzeugführer angezeigt. In der Zeichnung sind die Sperrvorrichtung 24 sowie der Unterbrecherschalter 25 gestrichelt dargestellt. Im Gegensatz zum Einordnen einer Strommeßvorrichtung führt das Einordnen eines Unterbrecherschalters 25 in die Stromversorgungsleitung 8 zu keiner Widerstandssteigerung und zu einer vernachläßigbar geringen, zusätzlichen Ausfallgefährdung für die Antiblockierrichtung 10.

Kurzfassung:

Die Einrichtung zur Anhänger-Kennung bei Lastzügen, deren Zugfahrzeug mit einer Antiblokkiervorrichtung ausgestattet ist, dient dazu, dem Fahrzeugführer zu signalisieren, ob auch das Anhängefahrzeug eine Antiblockiervorrichtung (10) aufweist und deren Kabelkupplung (9) ordentlich gekuppelt ist. Die Einrichtung weist hierzu eine elektronische, logische Schaltvorrichtung (7) auf, in welcher wenigstens ein erstes und ein zweites Signal verarbeitet werden: Das erste Signal wird nur bei vorhandenem Anhängefahrzeug erstellt, das zweite Signal wird durch eine Massepotentialführung in einer Prüfleitung (11,11') der Anhänger-Antiblockiervorrichtung (10) gebildet und als ein Informationssignal in der Schaltvorrichtung (7) gespeichert. Bei vorliegendem ersten Signal und zugleich fehlendem Informationssignal wird eine Informationslampe (4) betätigt, welche dem Fahrzeugführer das Fehlen bzw. eine mangelhafte Ankupplung einer Anhänger-Antiblockiervorrichtung (10) anzeigt.

Durch das Erstellen des zweiten Signals aus einer Massepotential-Führung der Prüfleitung (11) sind keine Einbauten in die Stromversorgungsleitung (8,8') für die Anhänger-Antiblockiervorrichtung (10) erforderlich, deren Stromversorgung und Ausfallrate werden daher von der Einrichtung nicht ungünstig beeinflußt.

## Bezugszeichenliste

1 Zünd- bzw. Betriebsschalter
2 Leitung
3 Bremslichtschalter
4 Informationslampe
5 Warnlampe
6 Zweigleitung
7 Schaltvorrichtung
8,8' Stromversorgungsleitung
9 Kabelkupplung
10 Antiblockiervorrichtung
11,11' Prüfleitung
12 Fahrzeugmasse
13 Zweigleitung
14 Leitung
15 Trennschalter
16,16' Anhängerbremslichtleitung
17 Kabelkupplung
18 Bremsleuchte
19 Leitung
20 Verstärker
21 Zweigleitung
22 Signalleitung
23 Schalter
24 Sperrvorrichtung
25 Unterbrecherschalter

## Ansprüche

1. Einrichtung zur Anhänger-Kennung bei Lastzügen, bei welchen das Zugfahrzeug eine Antiblockiervorrichtung aufweist und sowohl alleine als auch mit einem Anhängefahrzeug mit oder ohne eigener Antiblockiervorrichtung (10) betreibbar ist,
- mit einer Meßvorrichtung im Zugfahrzeug, die bei gekuppeltem Zustand einer vom Zug- zum Anhängefahrzeug führenden Brems-, Blinklicht- oder dgl. Leitung (16) ein erstes Signal abgibt,
- mit einer Stromversorgungsleitung (8) und einer Prüfleitung (11) im Zugfahrzeug, an welche vermittels einer Kabelkupplung (9) eine Stromversorgungs- bzw. eine Prüfleitung (8' bzw. 11') der Antiblockiervorrichtung (10) eines Anhängefahrzeuges anschließbar sind, wobei die Antiblockiervorrichtung (10) des Anhängefahrzeuges nach ihrer Inbetriebnahme in die Prüfleitung (11,11') ein bei Fahrtbeginn oder nach einer Wartezeit wieder erlöschendes Prüfsignal einsteuert,
- und mit einer elektronischen, logischen Schaltvorrichtung (7) im Zugfahrzeug, welche vom ersten Signal und einem, das Angeschlossensein einer Antiblockiervorrichtung des Anhängefahrzeuges anzeigenden, zweiten Signal ansteuerbar ist und die Betätigung eines gegebenenfalls als Informationslampe (4) ausgebildeten Schauzeichens für den Kraftfahrzeugführer steuert,
dadurch gekennzeichnet, daß der logischen Schaltvorrichtung (7) als zweites Signal das Prüfsignal zugeführt und in dieser Schaltvorrichtung (7) als ein Informationssignal gespeichert wird und daß die Schaltvorrichtung (7) das Schauzeichen (4) nur bei durch das erste Signal signalisiertem Angekuppeltsein eines Anhängefahrzeuges und fehlendem Informationssignal betätigt.

2. Einrichtung nach Anspruch 1, dadurch gekennzeichnet, daß das Prüfsignal durch eine Masseverbindung der Prüfleitung (11,11') in der Antiblockiervorrichtung (10) des Anhängefahrzeuges und das Informationssignal bei Masse-Potential in der Prüfleitung (11,11') gebildet werden.

3. Einrichtung nach Anspruch 1 oder 2, dadurch gekennzeichnet, daß der Schaltvorrichtung (7) ein eine Bremsbetätigung anzeigendes, drittes Signal zugeführt wird und daß die Schaltvorrichtung (7) das Schauzeichen (4) nur bei zusätzlich anstehendem, dritten Signal betätigt.

4. Einrichtung nach Anspruch 3, dadurch gekennzeichnet, daß das dritte Signal in Anhängigkeit vom Schalten eines Bremslichtschalters (3;23) erstellt wird.

5. Einrichtung nach einem oder mehreren der vorstehenden Ansprüche, wobei die Meßvorrichtung an einen Abschnitt der Brems-, Blinklicht-oder dgl. Leitung (16) angeschlossen ist, welcher unmittelbar mit einer Kabelkupplung (17) zum Anschluß einer entsprechenden Leitung (16') des Anhängefahrzeuges in Verbindung steht, dadurch gekennzeichnet, daß das erste Signal durch eine über einen Verbraucher eines Anhängefahrzeuges, gegebenenfalls dessen Brems-bzw. Blinklichtlampen (18) geführte Masseverbindung des Abschnittes der Leitung (16) gebildet wird.

6. Einrichtung nach Anspruch 5, dadurch gekennzeichnet, daß das erste Signal durch Massepotential in der Brems-, Blinklicht- oder dgl. Leitung (16) bei unbetätigtem, an diese Leitung angeschlossenem Verbraucher (18) gebildet und während der Betätigungszeit des Verbrauchers (18) gespeichert wird.

7. Einrichtung nach einem oder mehreren der vorstehenden Ansprüche, gekennzeichnet durch eine Sperrvorrichtung (24), welche nach Inbetriebnahme des Zugfahrzeuges ein Trennen der Kabelkupplung (9) zumindest für die Stromversorgungsleitung (8,8') sperrt.

8. Einrichtung nach Anspruch 7, dadurch gekennzeichnet, daß die Sperrvorrichtung (24) vom Zünd- bzw. Betriebsschalter (1) des Zugfahrzeuges schaltbar ist.

9. Einrichtung nach einem oder mehreren der Ansprüche 1 bis 5, dadurch gekennzeichnet, daß in die Stromversorgungsleitung (8) ein Unterbrecherschalter (25) eingeordnet ist, der von der eine Zeitmeßvorrichtung aufweisenden, logischen Schaltvorrichtung (7) derart gesteuert ist, daß er in bestimmten Zeitintervallen kurzzeitig geöffnet wird, wobei das Öffnen bei gleichzeitig vorhandenem Betätigungszustand der Bremse unterdrückt bzw. beendet wird, und daß bei Öffnen des Unterbrecherschalters (25) eingespeichertes Informationssignal gelöscht wird.

EP 0 413 976 A2